# EUROPEAN PATENT SPECIFICATION

(11) **EP 4 342 347 B1**
(45) Date of publication and mention of the grant of the patent: **13.05.2026**
(21) Application number: 23189684.6
(22) Date of filing: 04.08.2023
(51) Int. Cl.: A47J 42/08

(54) **ADJUSTING MECHANISM AND GRINDER USING SAME**
VERSTELLMECHANISMUS UND MÜHLE DAMIT
MÉCANISME DE RÉGLAGE ET MOULIN L'UTILISANT

(30) Priority: 22.09.2022 CN 202222553527 U
(43) Date of publication of application: 27.03.2024
(73) Proprietor: Ningbo Chefshere Kitchen Technology Co., Ltd, Ningbo, Zhejiang 315000 (CN)
(72) Inventor: Zhang, Chao, Ningbo 315000 (CN)
(74) Representative: karo IP

(56) References cited:
- WO-A1-2019/198987
- CN-U- 216 724 269
- DE-U1- 202007 009 829
- US-A1- 2019 313 853

## Description

### Technical Field

The present disclosure relates to the technical field of grinding, and more particularly relates to an adjusting mechanism and a grinder using the same.

### Background

With the development of the society and the improvement of people's living standards, more and more people pursue a high-quality life, and coffee has gradually become a common drink in people's daily life, among which hand ground coffee is favored by people because of the mellow and fragrant taste. To make hand ground coffee, it is necessary to use a grinder to grind coffee beans into powder first, and the grinding fineness of the coffee beans will affect the taste of brewed coffee.

At present, for the grinders on the market, it is usually possible to adjust the grinding fineness of the coffee beans by adjusting the gap between the grinding base and the grinding wheel, and the grinding base and the grinding wheel can be adjusted respectively, but in the prior art, the grinding base is usually adjusted in a stepped mode, i.e., the form of adjustment is stepped, so fine adjustment cannot be made so that the grinding fineness of bean powder is limited, and it is impossible for the user to obtain bean powder with various finenesses.

For example, a patent with a publication number of CN113208462B provides a bean grinding device, comprising a bearing seat in which a grinding base is arranged, a grinding base adjusting assembly and a grinding wheel adjusting assembly, wherein the grinding base adjusting assembly comprises an adjusting ring, at least one push component and at least one first elastic component, the adjusting ring has at least one continuous stepped structure abutted by the push component, the grinding base adjusting assembly determines the position of the grinding base relative to the grinding wheel based on the position of the push component against the continuous stepped structure, the grinding wheel adjusting assembly comprises a drive rod which drives the grinding wheel to rotate radially and a support component which is arranged on the drive rod and supports the grinding wheel, a first thread is formed on the drive rod, a second thread matched with the first thread is formed on the support component, and the grinding wheel adjusting assembly determines the position of the grinding wheel relative to the grinding base based on the position of the support component on the drive rod. In the present disclosure, the grinding base adjusting assembly is used for coarse adjustment of the position between the grinding base and the grinding wheel, the grinding wheel adjusting assembly is used for minor adjustment of the position between the grinding base and the grinding wheel, and the continuous stepped structure in the grinding base adjusting assembly makes the adjustment of the grinding base stepped, i.e., the adjustment of the spacing of the grinding base is limited by the order of the continuous stepped structure, so the grinding base adjusting assembly cannot realize finer adjustment.

US 2019/0313853A1 describes a grinder with an elevation ring to provide a function to adjust the particle size of powder produced by the grinder. The elevation ring can be moved by engaging a rotation ring that is provided with an adjustment ring that moves the elevation ring axially.

### Summary

In view of the problem that the adjustment of the grinder is not fine enough in the prior art, the present disclosure provides an adjusting mechanism and a grinder using the same, which can realize the minor adjustment of the grinding base so that the bean powder has more grinding finenesses.

A technical solution adopted to solve the above technical problem in the utility model is as follows:
An adjusting mechanism, comprising a grinding base adjusting ring, a fixed ring, a rotating ring and a guide ring, wherein the rotating ring is movably connected with the fixed ring through threads, the guide ring is movably connected with the rotating ring through threads, the fixed ring is provided with a guide piece used for moving the guide ring axially, the grinding base adjusting ring is connected with the rotating ring, and the grinding base adjusting ring drives the rotating ring to rotate when rotating so as to drive the guide ring move axially; and the adjusting mechanism makes adjustment by means of threads, with high flexibility, high adjustment accuracy and fine adjustment.

Further, the fixed ring is provided with a first internal thread, the rotating ring is provided with a first external thread, and the rotating ring is movably connected with the first internal thread through the first external thread.

Also, the rotating ring is provided with a second internal thread, the guide ring is provided with a second external thread, and the guide ring is movably connected with the second internal thread through the second external thread.

Finally, the guide ring is provided with a guide groove, and the guide piece is located in the guide groove so that the guide ring is limited by the guide groove and the guide piece to move axially.

In some embodiments, the guide ring is provided with an upper limiting part and a lower limiting ring for installing the grinding base so that the grinding base can be limited between the upper limiting part and the lower limiting ring.

In some embodiments, the upper limiting part is located at the top of the guide ring, the lower end of the guide ring is provided with a third external thread, the lower limiting ring is provided with a third internal thread, and the lower limiting ring is connected with the third external thread through the third internal thread.

In some embodiments, the rotating ring is provided with a connecting column, the side wall of the fixed ring is provided with a limiting hole, the connecting column is penetrated through the limiting hole, the grinding base adjusting ring is sleeved on the outer side of the fixed ring, the inner side of the grinding base adjusting ring is provided with a limiting groove, and the connecting column is located in the limiting groove so that the grinding base adjusting ring drives the rotating ring to rotate when rotating.

In some embodiments, the outer side wall of the fixed ring is provided with first clamping beads, the inner side wall of the grinding base adjusting ring is provided with a plurality of first clamping grooves, and when the grinding base adjusting ring is rotated, the first clamping beads are in contact with the first clamping grooves, which can improve the user's feel during adjustment.

In some embodiments, the outer side of the grinding base adjusting ring is provided with anti-skid stripes for increasing friction.

A grinder, comprising a material bin and a grinding base arranged in the material bin, wherein the grinding base is provided with the adjusting mechanism; and the grinder has fine adjustment, high flexibility and high adjustment accuracy.

In some embodiments, the bottom of the material bin is provided with a fourth internal thread, the top of the fixed ring is provided with a fourth external thread, and the material bin is connected with the fourth external thread of the fixed ring through the fourth internal thread.

In some embodiments, the grinder also comprises a powder bin, wherein the top of the powder bin is provided with a fifth external thread, the bottom of the fixed ring is provided with a fifth internal thread, and the powder bin can be connected with the fifth internal thread of the fixed ring through the fifth external thread.

A grinder, comprising a material bin and a grinding base and a grinding wheel which are arranged in the material bin, and further comprising a grinding wheel adjusting mechanism used for adjusting the position of the grinding wheel and a grinding base adjusting mechanism used for adjusting the position of the grinding base. The grinder has finer adjustment, more grinding finenesses and higher flexibility.

In some embodiments, the grinding wheel adjusting mechanism comprises a grinding wheel adjusting ring and a central shaft, a central column is arranged in the material bin, the central column is provided with a central hole, the central shaft is arranged in the central hole, the lower end of the central shaft is connected with the grinding wheel, the grinding wheel adjusting ring is movably connected with the top of the central column through threads, the central shaft is connected with the grinding wheel adjusting ring, the central shaft can be rotated circumferentially relative to the grinding wheel adjusting ring and the central hole, and the grinding wheel adjusting ring drives the central column to move axially when rotating so as to drive the grinding wheel to move axially.

In some embodiments, the grinding wheel adjusting ring is provided with a sixth external thread, the top of the central hole is provided with a sixth internal thread, and the grinding wheel adjusting ring is movably connected with the sixth internal thread of the central hole through the sixth external thread.

In some embodiments, the center of the grinding wheel adjusting ring is provided with a stepped hole, the central shaft is penetrated through the stepped hole, a third bearing is arranged in the stepped hole, a pressure ring is arranged above the third bearing, the central shaft is provided with an opening ring, and the opening ring is located above the pressure ring so that the central shaft is limited axially relative to the grinding wheel adjusting ring.

In some embodiments, the central shaft is provided with a second bearing, and the second bearing is located below the sixth internal thread for reducing the friction between the central shaft and the central hole.

In some embodiments, the central shaft is also provided with a first bearing, the lower end of the central column is provided with a first stepped hole, the first bearing is located at the first stepped hole, the central shaft is provided with an annular boss, a washer is installed above the annular boss, a spring is installed between the first bearing and the washer, the spring limits the first bearing on the top surface of the first stepped hole, and the spring acts on the washer to apply a downward force on the central shaft.

In some embodiments, the lower end of the central column is also provided with a second stepped hole, the diameter of the second stepper hole is greater than that of the first stepped hole, and the diameter of the washer is matched with that of the second stepped hole so that when moving upwards until the washer is in contact with the top surface of the second stepped hole, the central shaft cannot move upwards any more.

In some embodiments, the top of the grinding wheel is in contact with the bottom of the annular boss, the bottom of the grinding wheel is provided with a base, and the base is connected and fixed with the central shaft through threads so that the grinding wheel is limited between the annular boss and the base.

In some embodiments, a reinforcing rib is vertically arranged between the central column and the inner wall of the material bin, the top of the reinforcing rib is provided with second clamping beads, the grinding wheel adjusting ring is provided with a plurality of second clamping grooves, and when the grinding wheel adjusting ring is rotated, the second clamping beads are in contact with the second clamping grooves, which can assist the user to adjust the grinding wheel and improve the user's feel during adjustment.

In some embodiments, the top surface of the grinding wheel adjusting base is provided with scales and digital marks for indicating the adjusting height of the grinding wheel.

In some embodiments, the material bin is provided with a cover, the cover is connected with the top of the central shaft and provided with a crank handle, and the crank handle can be rotated to drive the central shaft to rotate, so as to drive the grinding wheel to rotate.

Compared with the prior art, the present disclosure provides an adjusting mechanism and a grinding using the same, the adjusting mechanism converts the rotating motion of the grinding base adjusting ring into the axial movement of the grinding base through threads, and the degree of adjustment can be controlled by the user so that the adjustment can be finer to meet the needs of the user to a great extent.

### Description of Drawings

The present disclosure will be further described below in detail in combination with the drawings and preferred embodiments. However, those skilled in the art will understand that the drawings are only drawn for the purpose of explaining the preferred embodiments, and thus shall not be taken as a limitation to the scope of the present disclosure. In addition, unless otherwise specified, the drawings only schematically illustrate the composition or structure of the described object and may include exaggerated displays, and the drawings are not necessarily drawn to scale.
Fig. 1: a sectional view of a grinder provided by the present disclosure;
Fig. 2: an enlarged view of part A in Fig. 1;
Fig. 3: a structural schematic diagram of a guide ring of an adjusting mechanism provided by the present disclosure;
Fig. 4: an internal structural schematic diagram of a grinder provided by the present disclosure;
Fig. 5: a structural schematic diagram of a fixed ring of an adjusting mechanism provided by the present disclosure;
Fig. 6: a structural schematic diagram of a grinding base adjusting ring of an adjusting mechanism provided by the present disclosure;
Fig. 7: a top view of a grinder provided by the present disclosure (part of the structure is hidden);
Fig. 8: a sectional view along the A-A line in Fig. 7;
Fig. 9: a sectional isometric view of a material bin of a grinder provided by the present disclosure;

In the figures, reference signs are as follows:
1. material bin; 101. grinding wheel; 102. grinding base; 11. central column; 111. central hole; 112. first stepped hole; 113. second stepped hole; 12. reinforcing rib; and 121. second clamping bead;
21. grinding base adjusting ring; 211. limiting groove; 212. first clamping groove; 213. anti-skid stripes; 22. fixed ring; 221. limiting hole; 222. first clamping bead; 23. rotating ring; 231. connecting column; 24. guide ring; 241. upper limiting part; 242. guide groove; 25. guide piece; and 26. lower limiting ring;
22a. first internal thread; 23a. first external thread; 23b. second internal thread; 24b. second external thread; 26c. third internal thread; 24c. third external thread; 1d. fourth internal thread; 22d. fourth external thread; 22e. fifth internal thread; 4e. fifth external thread; 11f. sixth internal thread; and 31f. sixth external thread;
31. grinding wheel adjusting ring; 311. pressure ring; 312. opening ring; 313. second clamping groove; 32. central shaft; 321. third bearing; 322. second bearing; 323. first bearing; 324. annular boss; 325. washer; 326. spring; and 327. base;
4. powder bin; 5. cover; and 51. crank handle.

### Detailed Description

The present disclosure is described in detail below in combination with the drawings.

To make the purpose, the technical solution and the advantages of the utility model more clear, the present disclosure will be further described below in detail in combination with the drawings and the embodiments. It should be understood that specific embodiments described herein are only used for explaining the present disclosure, not used for limiting the present disclosure.

It should be understood for those skilled in the art that in the utility model, terms such as "longitudinal", "transverse", "upper", "lower", "front", ""rear", left", "right", "vertical", "horizontal", "top", "bottom", "inner", "outer", etc. indicate direction or position relationships shown based on the drawings, and are only intended to facilitate the description of the utility model and the simplification of the description rather than to indicate or imply that the indicated device or element must have a specific direction or constructed and operated in a specific direction, and therefore, the above terms shall not be understood as a limitation to the utility model.

### Embodiment 1:

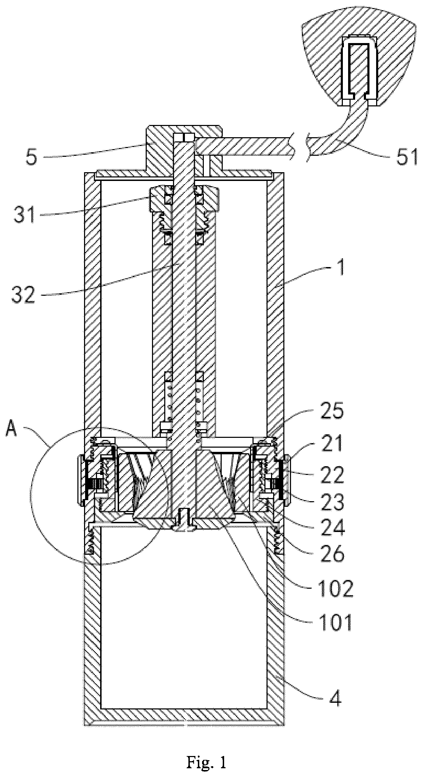

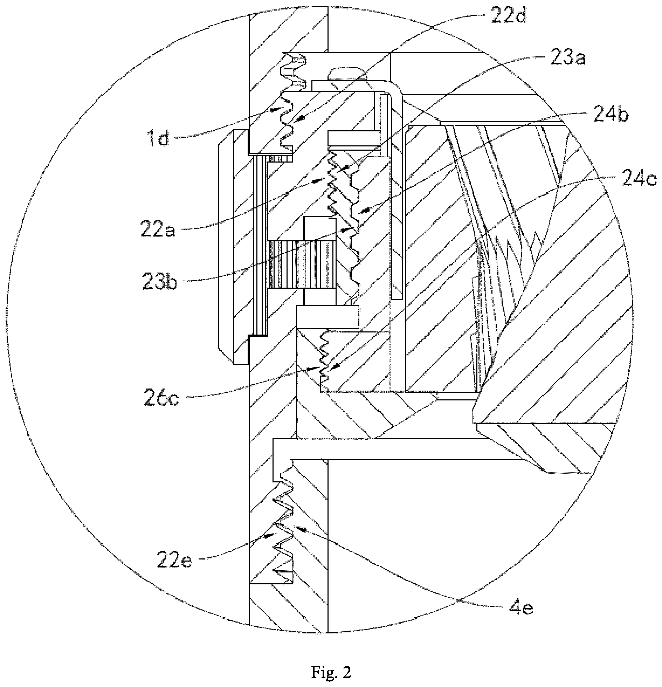

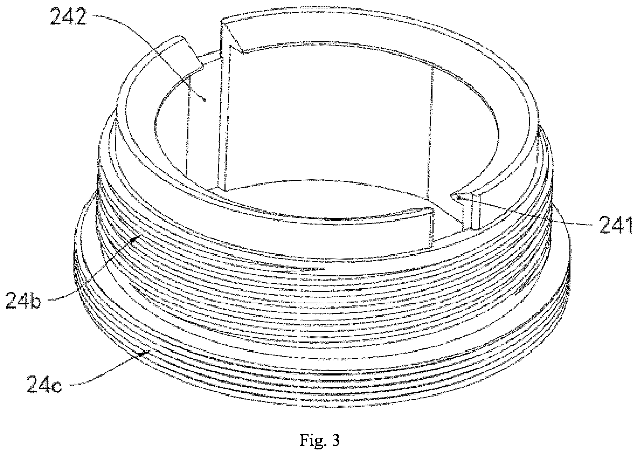

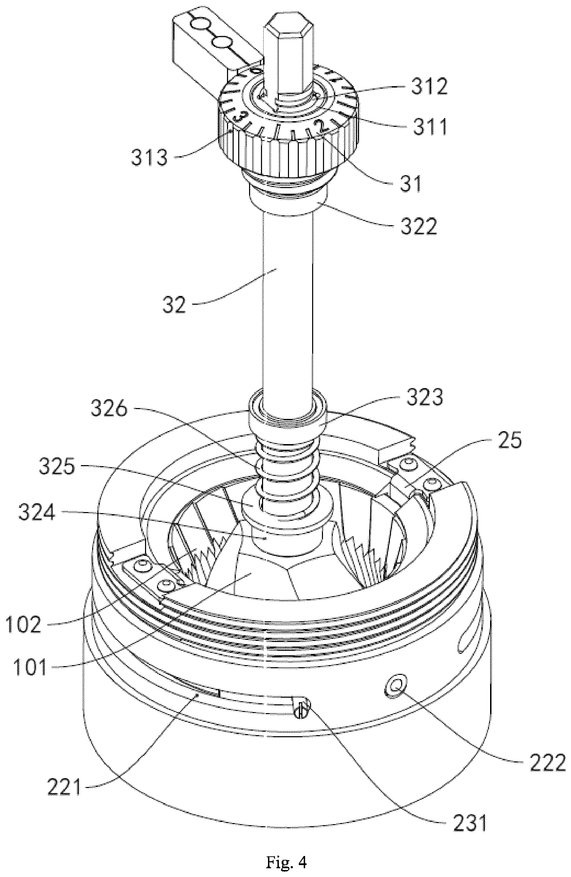

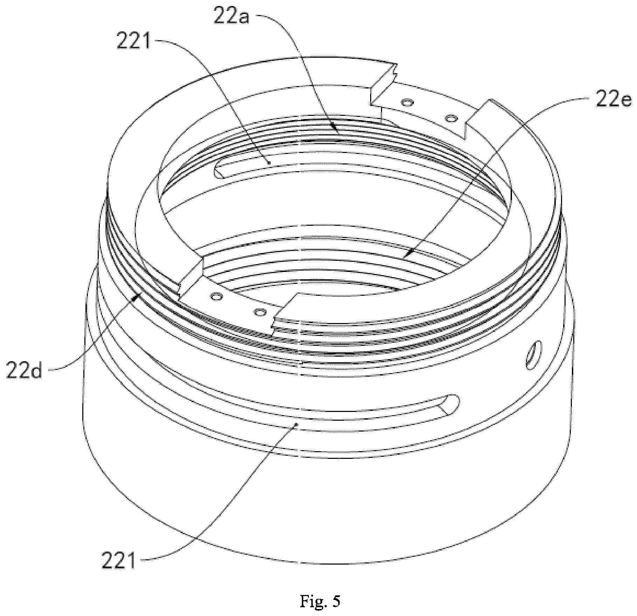

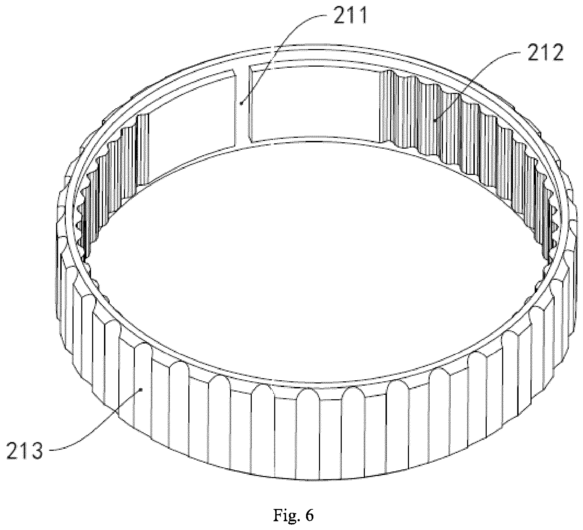

An adjusting mechanism shown in Fig. 1 to Fig. 6 is described in detail as follows:
The adjusting mechanism comprises a grinding base adjusting ring 21, a fixed ring 22, a rotating ring 23 and a guide ring 24, wherein the rotating ring 23 is located on the inner side of the fixed ring 22 and movably connected with the fixed ring 22 through threads, the guide ring 24 is located on the inner side of the rotating ring 23 and movably connected with the rotating ring 23 through threads, the fixed ring 22 is provided with guide pieces 25 used for moving the guide ring 24 axially, the guide ring 24 is provided with an upper limiting part 241 and a lower limiting ring 26 for installing the grinding base 102 so that the grinding base 102 can be limited between the upper limiting part 241 and the lower limiting ring 26, the grinding base adjusting ring 21 is located on the outer side of the fixed ring 22 and connected with the rotating ring 23, and the grinding base adjusting ring 21 can drive the rotating ring 23 to rotate spirally when rotating so as to drive the guide ring 24 move axially under the guidance of the guide pieces 25 to drive the grinding base 102 to move axially. Since the adjusting mechanism converts the rotating motion of the grinding base adjusting ring 21 into the linear motion of the grinding base 102 through threads, the adjustment of the grinding base 102 is stepless, the user can make fine adjustment or coarse adjustment according to the needs, and the adjustment can be fine to meet the needs of different users to a great extent.

Further, the fixed ring 22 is provided with a first internal thread 22a, the rotating ring 23 is provided with a first external thread 23a, the rotating ring 23 is movably connected with the first internal thread 22a through the first external thread 23a, the rotating ring 23 is provided with a second internal thread 23b, the guide ring 24 is provided with a second external thread 24b, and the guide ring 24 is movably connected with the second internal thread 23b through the second external thread 24b.

In addition, in the present embodiment, the guide ring 24 is symmetrically provided with two guide grooves 242, the guide pieces 25 are installed on the fixed ring 22, and the guide pieces 25 are located in the guide grooves 242 so that the guide ring 24 can move axially under the guidance of the guide grooves 242 and the guide pieces 25. It can be understood that the number and shape of the guide pieces 25 are consistent with those of the guide grooves 242. It is worth mentioning that the guide pieces 25 in the present embodiment are made of brass, which has good strength and wear resistance and can be used for guiding the guide ring 24 to extend the service life.

Further, the upper limiting part 241 of the guide ring 24 is located at the top of the guide ring 24, and the lower limiting ring 26 is connected with the guide ring 24 through threads, so as to facilitate the installation of the grinding base 102. Specifically, the lower end of the guide ring 24 is provided with a third external thread 24c, the lower limiting ring 26 is provided with a third internal thread 26c, and the lower limiting ring 26 is connected with the third external thread 24c through the third internal thread 26c so that the grinding base 102 can be limited between the upper limiting part 241 and the lower limiting ring 26, so the guide ring 24 can drive the grinding base 102 to move axially when moving axially.

Further, the rotating ring 23 is provided with a connecting column 231, the side wall of the fixed ring 22 is provided with a limiting hole 221, the connecting column 231 is penetrated through the limiting hole 221, the limiting hole 221 allows the connecting column 231 to move only within the range of the limiting hole 221, the range of the limiting hole 221 is the effective adjustment range of the grinding base, the grinding base adjusting ring 21 is sleeved on the outer side of the fixed ring 22, the inner side of the grinding base adjusting ring 21 is provided with a limiting groove 211, and the connecting column 231 is located in the limiting groove 211 so that the grinding base adjusting ring 21 can drive the rotating ring 23 to rotate when rotating. In addition, the outer side of the grinding base adjusting ring 21 is also provided with anti-skid stripes 213 for increasing friction, so the user's hands are not easy to skid when rotating the grinding base adjusting ring 21.

In addition, the adjusting mechanism is a stepless adjusting mechanism in the present embodiment, to improve the user's feel during adjustment, the outer side wall of the fixed ring 22 is provided with first clamping beads 222, the inner side wall of the grinding base adjusting ring 21 is provided with a plurality of first clamping grooves 212, and when the grinding base adjusting ring 21 is rotated, the first clamping beads 222 are in contact with the first clamping grooves 212, which is convenient for assisting the user to make adjustment better and improving the feel of use, and the first clamping beads 222 will produce a crisp sound when rotating, so the user's auditory experience is better.

It can be understood that the adjusting mechanism makes adjustment by means of threads in the present embodiment, so the adjustment of various finenesses can be set by changing the pitch; and specifically, when the pitch is small, the adjustment can be finer, and when the pitch is large, the adjustment is coarser.

### Embodiment 2:

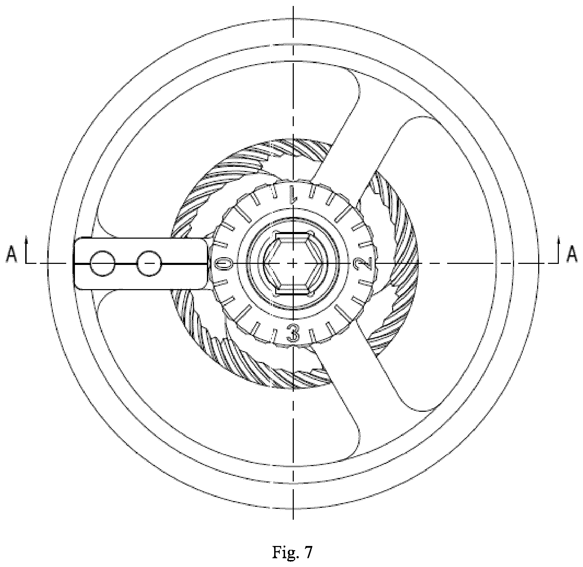

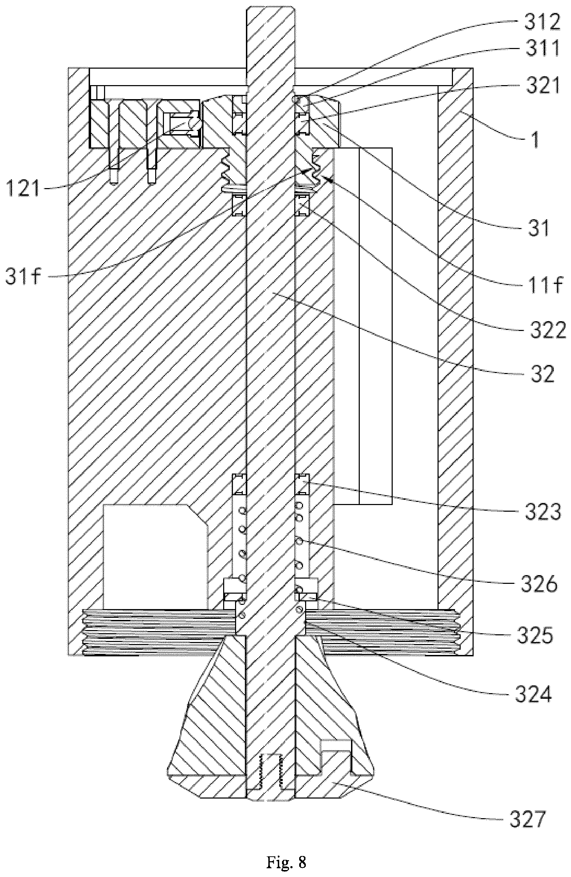

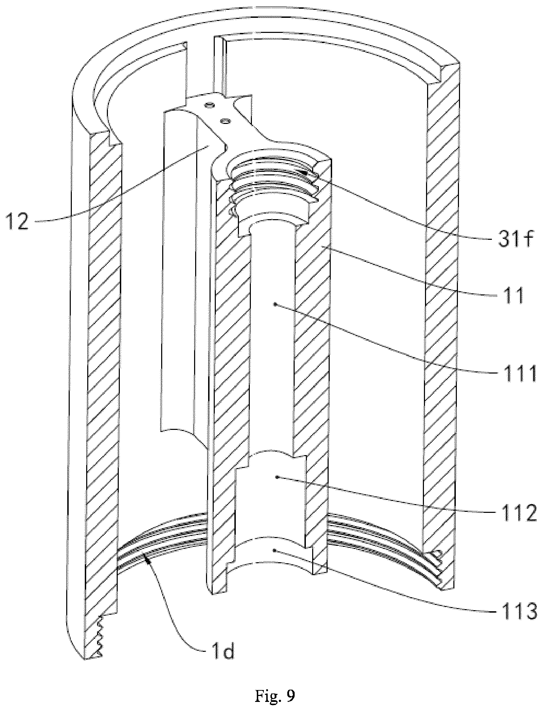

A grinder shown in Fig. 1 to Fig. 9 is described in detail as follows:
The grinder comprises a material bin 1 and a grinding base 102 and a grinding wheel 101 arranged in the material bin 1, wherein the grinding base 102 and the grinding wheel 101 are matched to grind beans, and the grinding base 102 is provided with the adjusting mechanism of the above embodiment for adjusting the grinding base 102. It can be understood that the grinding base 102 has a hollow structure where the grinding wheel 101 is located, and a grinding gap is formed between the grinding wheel 101 and the grinding base 102. Beans are concentrated at the grinding gap after being put in the material bin 1, and ground by rotating the grinding wheel 101. In addition, grinding teeth on the grinding wheel 101 and the grinding base 102 are arranged obliquely, so the size of the grinding gap can be adjusted by adjusting the height of the grinding wheel 101 or the grinding base 102, so as to adjust the fineness of ground particles.

It is worth mentioning that in the present embodiment, the grinder is a coffee bean grinder, and the adjusting mechanism is used for adjusting the grinding base 102 on the coffee bean grinder, but the adjusting mechanism can also be used on grinders for other kinds of beans.

Further, for the convenience of use, the bottom of the material bin 1 is provided with a fourth internal thread 1d, the top of the fixed ring 22 is provided with a fourth external thread 22d, and the material bin 1 is connected with the fourth external thread 22d of the fixed ring 22 through the fourth internal thread 1d. In addition, the grinder also comprises a powder bin 4, wherein the top of the powder bin 4 is provided with a fifth external thread 4e, the bottom of the fixed ring 22 is provided with a fifth internal thread 22e, and the powder bin 4 can be connected with the fifth internal thread 22e of the fixed ring 22 through the fifth external thread 4e, so the installation is very convenient.

Further, the grinding wheel 101 is also provided with a grinding wheel adjusting mechanism, the grinding wheel adjusting mechanism comprises a grinding wheel adjusting ring 31 and a central shaft 32, a central column 11 is arranged in the material bin 1, the central column 11 is provided with a central hole 111, the central shaft 32 is arranged in the central hole 111, the lower end of the central shaft 32 is connected with the grinding wheel 101, the grinding wheel adjusting ring 31 is movably connected with the top of the central column 11 through threads, the central shaft 32 is connected with the grinding wheel adjusting ring 31, the central shaft 32 can be rotated circumferentially relative to the grinding wheel adjusting ring 31 and the central hole 111, and the grinding wheel adjusting ring 31 drives the central column 11 to move axially when rotating so as to drive the grinding wheel 101 to move axially; similarly, the grinding wheel adjusting mechanism converts the rotating motion of the grinding wheel adjusting ring 31 into the linear motion of the central shaft 32 through threads, so the grinding wheel adjusting mechanism is also a stepless adjusting mechanism, and the adjustment is fine; and in addition, the grinding wheel adjusting ring 31 is arranged above the central column 11, the operation is very convenient, and it is not necessary to remove the powder bin 4 when adjusting the grinding wheel 101, so it is very convenient even if the grinding wheel 101 needs to be further adjusted during use.

Further, the grinding wheel adjusting ring 31 is provided with a sixth external thread 31f, the top of the central hole 111 is provided with a sixth internal thread 11f, the grinding wheel adjusting ring 31 is movably connected with the sixth internal thread 11f of the central hole 111 through the sixth external thread 31f, the center of the grinding wheel adjusting ring 31 is provided with a stepped hole, and the central shaft 32 is penetrated through the stepped hole; since the central shaft 32 can be rotated circumferentially relative to the grinding wheel adjusting ring 31, a third bearing 321 is arranged in the stepped hole for reducing the friction, a pressure ring 311 is arranged above the third bearing 321, the central shaft 32 is provided with an opening ring 312, and the opening ring 312 is located above the pressure ring 311 so that the central shaft 32 is limited axially relative to the grinding wheel adjusting ring 31, so the grinding wheel adjusting ring 31 can drive the central shaft 32 to move axially when rotating spirally.

Further, since the central shaft 32 can be rotated circumferentially relative to the central hole 111, the central shaft 32 is provided with a second bearing 322, the second bearing 322 is located below the sixth internal thread 11f for reducing the friction between the central shaft 32 and the central hole 111, the central shaft 32 is also provided with a first bearing 323, the first bearing 323 is also used for reducing the friction between the central shaft 32 and the central hole 111, the lower end of the central column 111 is provided with a first stepped hole 112, the diameter of the first stepped hole 112 is larger than that of the central hole 111, the first bearing 323 is located at the first stepped hole 112, the central shaft 32 is provided with an annular boss 324, a washer 325 is installed above the annular boss 324, a spring 326 is installed between the first bearing 323 and the washer 325, the spring 326 limits the first bearing 323 on the top surface of the first stepped hole 112, and the spring 326 acts on the washer 325 to apply a downward force on the central shaft 32.

It can be understood that since the spring 326 always applies a downward force on the central shaft 32 so that the opening ring 312 on the central shaft 32 is in contact with the pressure ring 311, so when the grinding wheel adjusting ring 31 is rotated spirally upwards, the pressure ring 311 is pushed against the opening ring 312, so that the central shaft 32 is lifted up, and the spring 326 is gradually compressed; and when the grinding wheel adjusting ring 31 is rotated spirally downwards, the opening ring 312 is always in contact with the pressure ring 311 due to the action of the spring 326 and then moves downwards.

Further, the lower end of the central column 11 is also provided with a second stepped hole 113, the diameter of the second stepper hole 113 is greater than that of the first stepped hole 112, and the diameter of the washer 325 is matched with that of the second stepped hole 113 so that when moving upwards until the washer 325 is in contact with the top surface of the second stepped hole 113, the central shaft 32 cannot move upwards any more, and thus can move within a reasonable range, so the depth of the second stepped hole 113 is the adjustment range of the grinding wheel.

Further, the top of the grinding wheel 101 is in contact with the bottom of the annular boss 324, the bottom of the grinding wheel 101 is provided with a base 327, the base 327 is connected and fixed with the central shaft 32 through threads so that the grinding wheel 101 is limited between the annular boss 324 and the base 327, and the base 327 is also provided with a limiting column so that the grinding wheel 101 cannot rotate circumferentially relative to the central shaft 32, so the central shaft 32 can drive the grinding wheel 101 to rotate to grind beans when rotating.

Further, reinforcing ribs 12 are vertically arranged between the central column 11 and the inner wall of the material bin 1, the number of the reinforcing ribs 12 is three in the present embodiment, a passage for feeding beans is located between the reinforcing ribs 12, the top of one reinforcing rib 12 is provided with a second clamping bead 121, the grinding wheel adjusting ring 31 is provided with a plurality of second clamping grooves 313, and when the grinding wheel adjusting ring 31 is rotated, the second clamping bead 121 is in contact with the second clamping grooves 313, which can assist the user to adjust the grinding wheel 101 and improve the user's feel during adjustment; at the same time, the second clamping grooves 313 also can increase the friction to prevent the user's hand from skidding when rotating the grinding wheel adjusting ring 31; and in addition, the top surface of the grinding wheel adjusting base is provided with scales and digit marks, the clamping bead can be used as a pointer, the scales or digital marks can indicate the adjustment height of the grinding wheel when corresponding to the clamping bead, which improves the user's experience.

Further, the material bin 1 is provided with a cover 5, the cover 5 is inserted into the top of the central shaft 32 and provided with a crank handle 51, and the crank handle 51 can be rotated to drive the central shaft 32 to rotate, so as to drive the grinding wheel 101 to rotate. When the grinder is used, the cover 5 can be removed, and beans can be put in. When it is necessary to adjust the grinding wheel 101, the cover 5 also can be removed, and the operation is simple.

It can be understood that the grinding wheel adjusting mechanism also makes adjustment by means of threads in the present embodiment, so different pitches result in different degrees of adjustment; when the grinding wheel adjusting mechanism is used in conjunction with the grinding base adjusting mechanism, one can be set for coarse adjustment, and the other can be set for fine adjustment, or both are set for fine adjustment; during production, relevant parts with corresponding pitch specifications can be produced; assembly according to different combinations can provide consumers with more choices of fineness; and compared with the production cost of a single pitch, the production cost of the solution is not significantly increased, with strong practicability.

Compared with the prior art, the present disclosure provides an adjusting mechanism and a grinding using the same, the degree of adjustment of the adjusting mechanism can be controlled by the user so that the adjustment can be finer to meet the needs of the user to a great extent, and the operation is simple and convenient.

The present disclosure is described in detail above. Specific individual cases are applied herein for elaborating the principle and embodiments of the present disclosure. The illustration of the above embodiments is merely used for helping to understand the present disclosure and the core thought. It should be noted that for those ordinary skilled in the art, several improvements and modifications can be made to the present disclosure without departing from the principles of the present disclosure.

## Claims

1. An adjusting mechanism, comprising a grinding base adjusting ring (21), a fixed ring (22), a rotating ring (23) and a guide ring (24), wherein the rotating ring (23) is movably connected with the fixed ring (22) through threads, the guide ring (24) is movably connected with the rotating ring (23) through threads, the fixed ring (22) is provided with a guide piece (25) used for moving the guide ring (24) axially, the grinding base adjusting ring (21) is connected with the rotating ring (23), the grinding base adjusting ring (21) is configured to drive the rotating ring (23) to rotate when rotating so as to drive the guide ring (24) move axially, wherein the fixed ring (22) is provided with a first internal thread (22a), the rotating ring (23) is provided with a first external thread (23a), and the rotating ring (23) is movably connected with the first internal thread (22a) through the first external thread (23a); and the rotating ring (23) is provided with a second internal thread (23b), the guide ring (24) is provided with a second external thread (24b), and the guide ring (24) is movably connected with the second internal thread (23b) through the second external thread (24b), wherein the guide ring (24) is provided with a guide groove (242), and the guide piece (25) is located in the guide groove (242) so that the guide ring (24) is limited by the guide groove (242) and the guide piece (25) to move axially.

2. The adjusting mechanism according to claim 1, wherein the guide ring (24) is provided with an upper limiting part (241) and a lower limiting ring (26) for installing the grinding base (102).

3. The adjusting mechanism according to claim 2, wherein the upper limiting part (241) is located at the top of the guide ring (24), the lower end of the guide ring (24) is provided with a third external thread (24c), the lower limiting ring (26) is provided with a third internal thread (26c), and the lower limiting ring (26) is connected with the third external thread (24c) through the third internal thread (26c).

4. The adjusting mechanism according to claim 1, wherein the rotating ring (23) is provided with a connecting column (231), the side wall of the fixed ring (22) is provided with a limiting hole (221), the connecting column (231) is penetrated through the limiting hole (221), the grinding base adjusting ring (21) is sleeved on the outer side of the fixed ring (22), the inner side of the grinding base adjusting ring (21) is provided with a limiting groove (211), and the connecting column (231) is located in the limiting groove (211) so that the grinding base adjusting ring (21) is configured to drive the rotating ring (23) to rotate when rotating.

5. The adjusting mechanism according to claim 1, wherein the outer side wall of the fixed ring (22) is provided with first clamping beads (222), the inner side wall of the grinding base adjusting ring (21) is provided with a plurality of first clamping grooves (212), and when the grinding base adjusting ring (21) is rotated, the first clamping beads (222) are in contact with the first clamping grooves (212).

6. The adjusting mechanism according to claim 1, wherein the outer side of the grinding base adjusting ring (21) is provided with anti-skid stripes (213) for increasing friction.

7. A grinder, comprising a material bin (1) and a grinding base (102) arranged in the material bin (1), wherein the grinding base (102) is provided with the adjusting mechanism of any one of claims 1-6.

8. The grinder according to claim 7, wherein the bottom of the material bin (1) is provided with a fourth internal thread (1d), the top of the fixed ring (22) is provided with a fourth external thread (22d), and the material bin (1) is connected with the fourth external thread (22d) of the fixed ring (22) through the fourth internal thread (1d).

9. The grinder according to claim 7, wherein the grinder also comprises a powder bin (4), the top of the powder bin (4) is provided with a fifth external thread (4e), the bottom of the fixed ring (22) is provided with a fifth internal thread (22e), and the powder bin (4) is connected with the fifth internal thread (22e) of the fixed ring (22) through the fifth external thread (4e).

10. A grinder, comprising a material bin (1) and a grinding base (102) and a grinding wheel (101) which are arranged in the material bin (1), and further comprising a grinding wheel (101) adjusting mechanism used for adjusting the position of the grinding wheel (101) and the grinding base (102) adjusting mechanism of any one of claims 1-6 used for adjusting the position of the grinding base (102).

11. The grinder according to claim 10, wherein the grinding wheel (101) adjusting mechanism comprises a grinding wheel adjusting ring (31) and a central shaft (32), a central column (11) is arranged in the material bin (1), the central column (11) is provided with a central hole (111), the central shaft (32) is arranged in the central hole (111), the lower end of the central shaft (32) is connected with the grinding wheel (101), the grinding wheel adjusting ring (31) is movably connected with the top of the central column (11) through threads, the central shaft (32) is connected with the grinding wheel adjusting ring (31), the central shaft (32) can be rotated circumferentially relative to the grinding wheel (101) adjusting ring and the central hole (111), and the grinding wheel adjusting ring (31) is configured to drive the central column (11) to move axially when rotating so as to drive the grinding wheel (101) to move axially.

## Patentansprüche

1. Verstellmechanismus, aufweisend einen Mahlbasis-Einstellring (21), einen fixierten Ring (22), einen drehbaren Ring (23) und einen Führungsring (24), wobei der drehbare Ring (23) über Gewindegänge beweglich mit dem fixierten Ring (22) verbunden ist, wobei der Führungsring (24) über Gewindegänge beweglich mit dem drehbaren Ring (23) verbunden ist, wobei der fixierte Ring (22) mit einem Führungsstück (25) vorgesehen ist, das zum axialen Bewegen des Führungsrings (24) dient, der Mahlbasis-Einstellring (21) mit dem drehbaren Ring (23) verbunden ist, der Mahlbasis-Einstellring (21) dazu ausgebildet ist, den drehbaren Ring (23) bei Drehung dazu anzutreiben, sich zu drehen, um den Führungsring (24) axial zu bewegen, der fixierte Ring (22) mit einem ersten Innengewinde (22a) vorgesehen ist, der drehbare Ring (23) mit einem ersten Außengewinde (23a) vorgesehen ist und der drehbare Ring (23) über das erste Außengewinde (23a) beweglich mit dem ersten Innengewinde (22a) verbunden ist; und der drehbare Ring (23) mit einem zweiten Innengewinde (23b) vorgesehen ist, der Führungsring (24) mit einem zweiten Außengewinde (24b) vorgesehen ist und der Führungsring (24) über das zweite Außengewinde (24b) beweglich mit dem zweiten Innengewinde (23b) verbunden ist, wobei der Führungsring (24) mit einer Führungsnut (242) vorgesehen ist und sich das Führungsstück (25) in der Führungsnut (242) befindet, so dass der Führungsring (24) durch die Führungsnut (242) und das Führungsstück (25) in seiner axialen Bewegung begrenzt wird.

2. Der Verstellmechanismus nach Anspruch 1, wobei der Führungsring (24) mit einem oberen Begrenzungsteil (241) und einem unteren Begrenzungsring (26) zum Anbringen der Mahlbasis (102) vorgesehen ist.

3. Der Verstellmechanismus nach Anspruch 2, wobei sich der obere Begrenzungsteil (241) an der Oberseite des Führungsrings (24) befindet, das untere Ende des Führungsrings (24) mit einem dritten Außengewinde (24c) vorgesehen ist, der untere Begrenzungsring (26) mit einem dritten Innengewinde (26c) vorgesehen ist und der untere Begrenzungsring (26) über das dritte Innengewinde (26c) mit dem dritten Außengewinde (24c) verbunden ist.

4. Der Verstellmechanismus nach Anspruch 1, wobei der drehbare Ring (23) mit einer Verbindungssäule (231) vorgesehen ist, die Seitenwand des fixierten Rings (22) mit einer Begrenzungsöffnung (221) vorgesehen ist, die Verbindungssäule (231) durch die Begrenzungsöffnung (221) hindurchgeführt ist, der Mahlbasis-Einstellring (21) auf die Außenseite des fixierten Rings (22) aufgeschoben ist, die Innenseite des Mahlbasis-Einstellrings (21) mit einer Begrenzungsnut (211) vorgesehen ist und sich die Verbindungssäule (231) in der Begrenzungsnut (211) befindet, so dass der Mahlbasis-Einstellring (21) dazu ausgebildet ist, den drehbaren Ring (23) bei Drehung in Drehung zu versetzen.

5. Der Verstellmechanismus nach Anspruch 1, wobei die Außenseitenwand des fixierten Rings (22) mit ersten Klemmwülsten (222) vorgesehen ist, die Innenwand des Mahlbasis-Einstellrings (21) mit einer Vielzahl von ersten Klemmnuten (212) vorgesehen ist, und wenn der Mahlbasis-Einstellring (21) gedreht wird, die ersten Klemmwülste (222) mit den ersten Klemmnuten (212) in Kontakt stehen.

6. Der Verstellmechanismus nach Anspruch 1, wobei die Außenseite des Mahlbasis-Einstellrings (21) mit Rutschschutzstreifen (213) zur Erhöhung der Reibung vorgesehen ist.

7. Mühle, aufweisend einen Materialbehälter (1) und eine in dem Materialbehälter (1) angeordnete Mahlbasis (102), wobei die Mahlbasis (102) mit dem Verstellmechanismus nach einem der Ansprüche 1 bis 6 vorgesehen ist.

8. Die Mühle nach Anspruch 7, wobei der Boden des Materialbehälters (1) mit einem vierten Innengewinde (1d) vorgesehen ist, die Oberseite des fixierten Rings (22) mit einem vierten Außengewinde (22d) vorgesehen ist und der Materialbehälter (1) über das vierte Innengewinde (1d) mit dem vierten Außengewinde (22d) des fixierten Rings (22) verbunden ist.

9. Die Mühle nach Anspruch 7, wobei die Mühle außerdem einen Pulverbehälter (4) aufweist, wobei die Oberseite des Pulverbehälters (4) mit einem fünften Außengewinde (4e) vorgesehen ist, die Unterseite des fixierten Rings (22) mit einem fünften Innengewinde (22e) vorgesehen ist und der Pulverbehälter (4) über das fünfte Außengewinde (4e) mit dem fünften Innengewinde (22e) des fixierten Rings (22) verbunden ist.

10. Mühle, aufweisend einen Materialbehälter (1) sowie eine Mahlbasis (102) und ein Mahlrad (101), die im Materialbehälter (1) angeordnet sind, und ferner einen Mahlrad-Verstellmechanismus (101) zum Einstellen der Position des Mahlrades (101) sowie einen Mahlbasis-Verstellmechanismus (102) gemäß einem der Ansprüche 1 bis 6 zum Einstellen der Position der Mahlbasis (102) aufweist.

11. Die Mühle nach Anspruch 10, wobei der Mahlrad-Verstellmechanismus einen Mahlrad-Einstellring (31) und eine Zentralwelle (32) aufweist, eine zentrale Säule (11) im Materialbehälter (1) angeordnet ist, die zentrale Säule (11) mit einer zentralen Öffnung (111) vorgesehen ist, die Zentralwelle (32) in der zentralen Öffnung (111) angeordnet ist, das untere Ende der Zentralwelle (32) mit dem Mahlrad (101) verbunden ist, der Mahlrad-Einstellring (31) über Gewindegänge beweglich mit der Oberseite der zentralen Säule (11) verbunden ist, die Zentralwelle (32) mit dem Mahlrad-Einstellring (31) verbunden ist, die Zentralwelle (32) relativ zum Mahlrad-Einstellring und zur zentralen Öffnung (111) in Umfangsrichtung gedreht werden kann, und der Mahlrad-Einstellring (31) dazu ausgebildet ist, die zentrale Säule (11) bei Drehung zu einer axialen Bewegung anzutreiben, um das Mahlrad (101) zu einer axialen Bewegung anzutreiben.

## Revendications

1. Mécanisme de réglage comprenant une bague de réglage de base de mouture (21), une bague fixe (22), une bague rotative (23) et une bague de guidage (24), dans lequel la bague rotative (23) est reliée de manière mobile à la bague fixe (22) à travers des filetages, la bague de guidage (24) est reliée de manière mobile à la bague rotative (23) à travers des filetages, la bague fixe (22) est pourvue d'une pièce de guidage (25) utilisée pour déplacer la bague de guidage (24) axialement, la bague de réglage de base de mouture (21) est reliée à la bague rotative (23), la bague de réglage de base de mouture (21) est configurée pour entraîner la rotation de la bague rotative (23) lorsqu'elle tourne de manière à entraîner la bague de guidage (24) à se déplacer axialement, la bague fixe (22) étant pourvue d'un premier filetage interne (22a), la bague rotative (23) étant pourvue d'un premier filetage externe (23a), et la bague rotative (23) étant reliée de manière mobile au premier filetage interne (22a) à travers le premier filetage externe (23a) ; et la bague rotative (23) étant pourvue d'un deuxième filetage interne (23b), la bague de guidage (24) étant pourvue d'un deuxième filetage externe (24b), et la bague de guidage (24) étant reliée de manière mobile au deuxième filetage interne (23b) à travers le deuxième filetage externe (24b), la bague de guidage (24) étant pourvue d'une rainure de guidage (242) et la pièce de guidage (25) étant située dans la rainure de guidage (242) de sorte que la bague de guidage (24) est limitée par la rainure de guidage (242) et la pièce de guidage (25) pour se déplacer axialement.

2. Mécanisme de réglage selon la revendication 1, dans lequel la bague de guidage (24) est pourvue d'une partie de limitation supérieure (241) et d'une bague de limitation inférieure (26) pour l'installation de la base de mouture (102).

3. Mécanisme de réglage selon la revendication 2, dans lequel la partie de limitation supérieure (241) est située au niveau de la partie haute de la bague de guidage (24), l'extrémité inférieure de la bague de guidage (24) est pourvue d'un troisième filetage externe (24c), la bague de limitation inférieure (26) est pourvue d'un troisième filetage interne (26c), et la bague de limitation inférieure (26) est reliée au troisième filetage externe (24c) à travers le troisième filetage interne (26c).

4. Mécanisme de réglage selon la revendication 1, dans lequel la bague rotative (23) est pourvue d'une colonne de liaison (231), la paroi latérale de la bague fixe (22) est pourvue d'un trou de limitation (221), la colonne de liaison (231) est pénétrée à travers le trou de limitation (221), la bague de réglage de base de mouture (21) est manchonnée sur le côté extérieur de la bague fixe (22), la face intérieure de la bague de réglage de base de mouture (21) est pourvue d'une rainure de limitation (211), et la colonne de liaison (231) est située dans la rainure de limitation (211) de sorte que la bague de réglage de base de mouture (21) est configurée pour entraîner la rotation de la bague rotative (23) lorsqu'elle tourne.

5. Mécanisme de réglage selon la revendication 1, dans lequel la paroi latérale extérieure de la bague fixe (22) est pourvue de premières billes de serrage (222), la paroi latérale intérieure de la bague de réglage de base de mouture (21) est pourvue d'une pluralité de premières rainures de serrage (212), et lorsque la bague de réglage de base de mouture (21) tourne, les premières billes de serrage (222) sont en contact avec les premières rainures de serrage (212).

6. Mécanisme de réglage selon la revendication 1, dans lequel le côté extérieur de la bague de réglage de base de mouture (21) est pourvu de bandes antidérapantes (213) pour augmenter la friction.

7. Moulin comprenant un bac à matières (1) et une base de mouture (102) agencée dans le bac à matières (1), dans lequel la base de mouture (102) est équipée du mécanisme de réglage selon l'une des revendications 1 à 6.

8. Moulin selon la revendication 7, dans lequel le fond du bac à matières (1) est pourvu d'un quatrième filetage interne (1d), la partie haute de la bague fixe (22) est pourvue d'un quatrième filetage externe (22d), et le bac à matières (1) est relié au quatrième filetage externe (22d) de la bague fixe (22) à travers le quatrième filetage interne (1d).

9. Moulin selon la revendication 7, dans lequel le moulin comprend également un bac à poudre (4), la partie haute du bac à poudre (4) est pourvue d'un cinquième filetage externe (4e), la partie basse de la bague fixe (22) est pourvue d'un cinquième filetage interne (22e), et le bac à poudre (4) est relié au cinquième filetage interne (22e) de la bague fixe (22) à travers le cinquième filetage externe (4e).

10. Moulin comprenant un bac à matières (1), une base de mouture (102) et une meule (101) agencée dans le bac à matières (1), et comprenant en outre un mécanisme de réglage de meule (101) utilisé pour régler la position de la meule (101) et le mécanisme de réglage de la base de mouture (102) selon l'une quelconque des revendications 1 à 6 utilisé pour régler la position de la base de mouture (102).

11. Moulin selon la revendication 10, dans lequel le mécanisme de réglage de meule (101) comprend une bague de réglage de meule (31) et un arbre central (32), une colonne centrale (11) est disposée dans le bac à matières (1), la colonne centrale (11) est pourvue d'un trou central (111), l'arbre central (32) est agencé dans le trou central (111), l'extrémité inférieure de l'arbre central (32) est reliée à la meule (101), la bague de réglage de meule (31) est reliée de manière mobile à la partie haute de la colonne centrale (11) à travers des filetages, l'arbre central (32) est relié à la bague de réglage de meule (31), l'arbre central (32) peut tourner circonférentiellement par rapport à la bague de réglage de meule (101) et au trou central (111), et la bague de réglage de meule (31) est configurée pour entraîner la colonne centrale (11) à se déplacer axialement lorsqu'elle tourne de manière à entraîner la meule (101) à se déplacer axialement.
